# EUROPEAN PATENT SPECIFICATION

(11) **EP 4 296 002 B1**
(45) Date of publication and mention of the grant of the patent: **18.02.2026**
(21) Application number: 23181061.5
(22) Date of filing: 22.06.2023
(51) Int. Cl.: B25B 11/02, B23B 47/28

(54) **POCKET HOLE JIG**
TASCHENLOCHSPANNVORRICHTUNG
GABARIT DE TROU DE POCHE

(30) Priority: 23.06.2022 US 202263354831 P; 01.12.2022 US 202263429203 P
(43) Date of publication of application: 27.12.2023
(73) Proprietor: Techtronic Cordless GP, Anderson, SC 29621 (US)
(72) Inventor: FAUSS, Trevor, Anderson, 29621 (US); GROVES, Jeffrey, Anderson, 29621 (US); EVATT, Thomas, Anderson, 29621 (US); THACKERY, Clinton C., Anderson, 29621 (US)
(74) Representative: Meissner Bolte Partnerschaft mbB

(56) References cited:
- EP-A1- 3 391 984
- US-A1- 2018 290 217
- US-A1- 2019 030 619
- US-A1- 2019 111 499
- US-A1- 2020 254 532

## Description

### CROSS-REFERENCE TO RELATED APPLICATIONS

The present application claims priority to U.S. Patent Application Serial No. 63/354,831 filed on June 23, 2022 and U.S. Patent Application Serial No. 63/429,203, filed on December 1, 2022.

### FIELD

The present disclosure relates generally to hand tools for cabinet and furniture making, and more particularly to pocket hole jigs.

### BACKGROUND

When constructing cabinets and furniture, it is often necessary to butt join or otherwise couple two or more objects together. Pocket holes are often utilized to conceal the fasteners joining the objects together. The pocket holes generally plunge from a side surface of the object through an end face thereof. The object can then be butted against another object and a fastener can extend through the pocket hole into the other object to secure the objects together. US 2019/111499A1 discloses a pocket hole jig according to which a clamp rod is moved in order to move and tighten the clamp head against the object, at the same time rotating the drill guide via a pair of link arms connected to the clamp rod. Then, the actuator is moved to the closed position in order to lock the clamp head in a tightened state against the object.

### BRIEF DESCRIPTION

The present invention is defined in the appended independent claim. Preferred features of the invention are defined in the dependent claims.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a pocket hole jig in accordance with one or more embodiments of the present disclosure not according to the invention;
FIG. 2 is a first side view of the pocket hole jig of FIG. 1 in accordance with one or more embodiments of the present disclosure not according to the invention;
FIG. 3 is another first side view of the pocket hole jig of FIG. 1 in accordance with one or more embodiments of the present disclosure not according to the invention;
FIG. 4 is a top view of the pocket hole jig of FIG. 1 in accordance with one or more embodiments of the present disclosure not according to the invention;
FIG. 5 is a cross-sectional view of the pocket hole jig of FIG. 1 in accordance with one or more embodiments of the present disclosure not according to the invention;
FIG. 6 is a perspective view of the pocket hole jig of FIG. 1 in accordance with one or more embodiments of the present disclosure not according to the invention;
FIG. 7 is a perspective view of another pocket hole jig in accordance with one or more embodiments of the present disclosure not according to the invention;
FIG. 8A is a perspective view of another pocket hole jig in accordance with one or more embodiments of the present disclosure not according to the invention;
FIG. 8B is a perspective view of a body of the pocket hole jig of FIG. 8A in accordance with one or more embodiments of the present disclosure not according to the invention;
FIG. 8C is a perspective view of a spring-loaded bushing of the pocket hole jig of FIG. 8A in accordance with one or more embodiments of the present disclosure not according to the invention;
FIG. 9 is a perspective view of another pocket hole jig in accordance with one or more embodiments of the present disclosure;
FIG. 10 is a perspective view of the pocket hole jig of FIG. 9 as seen with a portion of a body of the pocket hole jig removed in accordance with one or more embodiments of the present disclosure;
FIG. 11 is a perspective view of the pocket hole jig of FIG. 9 as seen with a portion of a body of the pocket hole jig removed in accordance with one or more embodiments of the present disclosure;
FIG. 12 is a side view of the pocket hole jig of FIG. 9 as seen with an actuator of the pocket hole jig in a closed position in accordance with one or more embodiments of the present disclosure;
FIG. 13 is a side view of the pocket hole jig of FIG. 9 as seen when the actuator is initially moved from the closed position in accordance with one or more embodiments of the present disclosure;
FIG. 14 is a side view of the pocket hole jig of FIG. 9 as seen when the actuator is moved from the closed position in accordance with one or more embodiments of the present disclosure;
FIG. 15 is a side view of the pocket hole jig of FIG. 9 as seen when the actuator is in an open position in accordance with one or more embodiments of the present disclosure;
FIG. 16A is a side view of an actuator according to one or more embodiments of the present disclosure;
FIG. 16B is a side cross-sectional view of an actuator according to one or more embodiments of the present disclosure;
FIG. 16C is a perspective view of an actuator according to one or more embodiments of the present disclosure;
FIG. 16D is a perspective cross-sectional view of an actuator according to one or more embodiments of the present disclosure;
FIG. 17A is a perspective view of a pocket hole jig in accordance with one or more embodiments of the present disclosure;
FIG. 17B is a perspective view of a pocket hole jig in accordance with one or more embodiments of the present disclosure;
FIG. 18 is a perspective view of a carriage and dust extraction element of the pocket hole jig in accordance with one or more embodiments of the present disclosure;
FIG. 19 is a perspective view of a carriage and dust extraction element of the pocket hole jig in accordance with one or more embodiments of the present disclosure;
FIG. 20 is a perspective view of a drill guiding element in accordance with one or more embodiments of the present disclosure;
FIG. 21 is a perspective view of a drill guiding element in accordance with one or more embodiments of the present disclosure;
FIG. 22 is a cross-sectional view of the pocket hole jig of FIG. 17 in accordance with one or more embodiments of the present disclosure; and
FIG. 23 is an enlarged cross-sectional view of a portion of the pocket hole jig in accordance with one or more embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

In general, pocket hole jigs described herein allow users to easily align and/or clamp objects, e.g., wood, and drill the objects at specified alignments with respect to the objects. Pocket hole jigs may generally include a body and a pivotable drill guide.

One or more embodiments may include a translating nose fence. According to the invention, the drill guide is rotatable about an axle to set an angle and depth of the drill guide. One or more embodiments may further include locking notches into which locking tabs are inserted to set the angle and depth of the drill guide.

The invention includes a moveable clamp head and an actuator engageable by the user such that, as the user moves the actuator to a closed position, the clamp head tightens against an object positioned in a clamping region of the pocket hole jig. Movement of the actuator additionally locks the clamp head in a tightened state against the object. Movement of the actuator additionally rotates the drill guide to a suitable angle whereby a drill guided by the drill guide is ideally (or at least better) positioned for that dimensioned object. That is, the drill guide can be self-aligning. Without wishing to be bound by any particular principle, use of pocket hole jigs as described herein can eliminate the requirement of using two hands to use the pocket hole jig to tighten and lock objects while also self-aligning the drill guide to a suitable angular position based on the dimension of the object disposed in the clamping region.

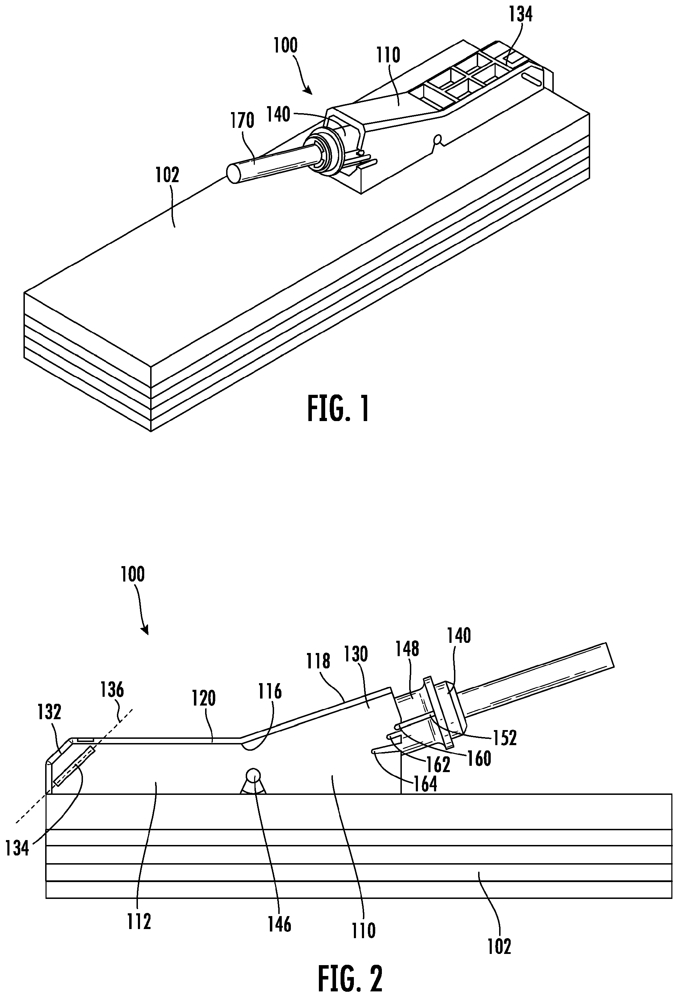

Referring now to the drawings, FIGS. 1 to 6 illustrate a pocket hole jig 100 in accordance with an exemplary embodiment disposed on a workpiece 102, e.g., a piece of wood. The pocket hole jig 100 can generally include a housing 110 having a first sidewall 112 and a second sidewall 114 spaced apart from the first sidewall 112. A top 116 can connect the first sidewall 112 to the second sidewall 114. The top 116 can include an upper portion 118 and a lower portion 120. The lower portion 120 of the top 116 can include a plurality of strength structures 122 which provide strength and support to the housing 110.

The housing 110 of the pocket hole jig 100 includes a proximal end 130 and a distal end 132. A translating nose fence 134 can disposed at the distal end 132 of the housing 110 and can translate linearly along an axis 136 that forms an angle A with respect to the surface of the workpiece 102. In an embodiment, the angle A can be offset from parallel and perpendicular with respect to a surface of the workpiece 102. For example, the relative angle A can be between 0° and 90°, as measured with respect to the workpiece 102, such as between 10° and 80°, such as between 20° and 70°. The translating nose fence 134 can translate to a stored position to allow the pocket hole jig 100 to be used inside of material that is being joined. For example, the pocket hole jig 100 may be used inside already-formed drawers, cabinets, or the like to form pocket holes. With the translating nose fence 134 in the stored position, the pocket hole jig 100 can be positioned at the existing joint. With the translating nose fence 134 deployed, the translating nose fence 134 can form a stop feature which aligns the pocket hole jig 100 relative to an end surface of the workpiece 102 such as shown in FIG. 1.

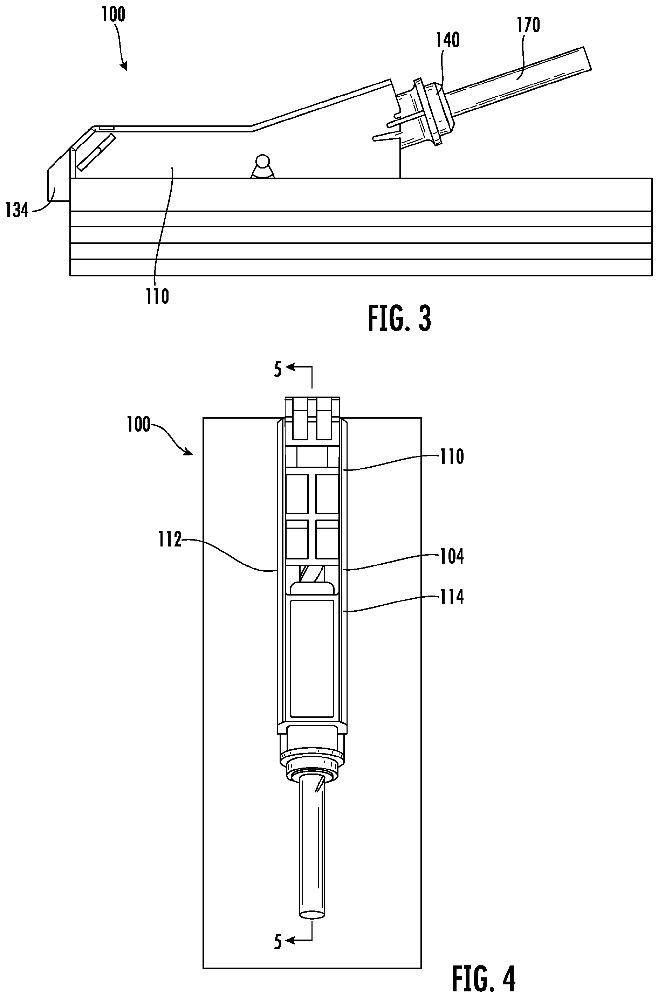

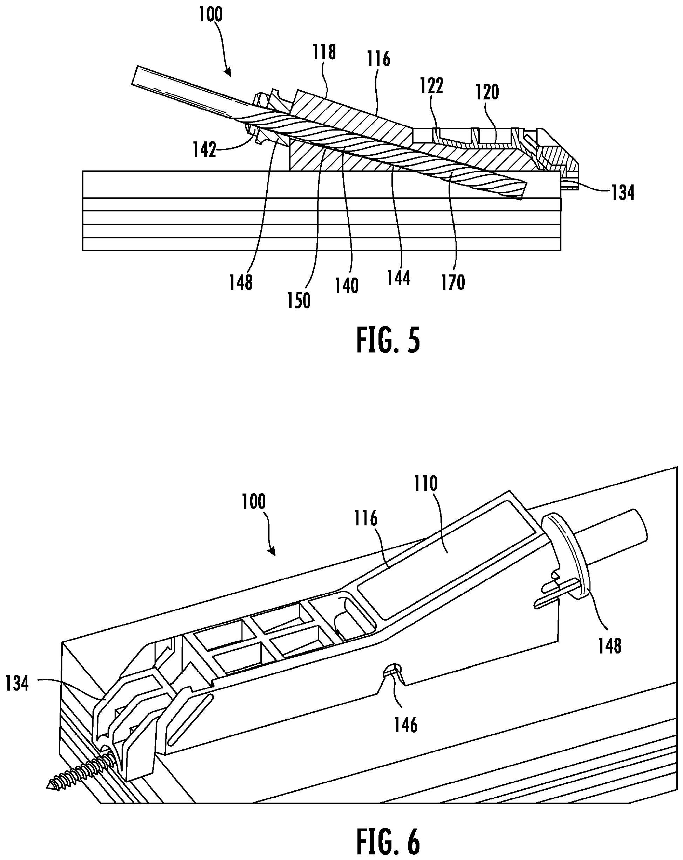

The pocket hole jig 100 further includes a drill bit guide 140 that includes a proximal end 142 and a distal end 144 (FIG. 5). As shown in FIGS. 2 and 3, the drill bit guide 140 includes an axle 146 around which the drill bit guide 140 selectively rotates. A spring-loaded bushing 148 is disposed around the proximal end 142 of the drill bit guide 140 and extends at least partially along the length of the drill bit guide 140. A spring 150 is disposed around the spring-loaded bushing 148 and is installed in tension in order to bias the spring-loaded bushing inward around the drill bit guide 140. The drill bit guide 140 includes a pair of locking tabs 152 diametrically opposed on the proximal end 142 of the drill bit guide 140.

Referring to FIG. 2, the sidewalls 112 and 114 can be formed with a plurality of locking notches, e.g., a first locking notch 160, a second locking notch 162, and a third locking notch 164. During use, the user can change a material thickness setting by pulling out the drill bit guide 140, e.g., using the spring-loaded bushing 148, and rotating the drill bit guide 140 about the axle 146 and within the sidewalls 112, 114, to align the locking tabs 152 with one of the locking notches 160, 162 or 164 and then releasing the spring-loaded bushing 148 to allow the locking tabs 152 to slide into the selected locking notch 160, 162 or 164. The drill depth and angle can be adjusted by moving the drill bit guide 140 as described. Further, the depth and the angle of the pocket hole drilled using the adjustable pocket hole jig 100 can be determined by the material thickness setting. Adjusting a stop collar on a drill bit 170 within the drill bit guide 140 is not necessary.

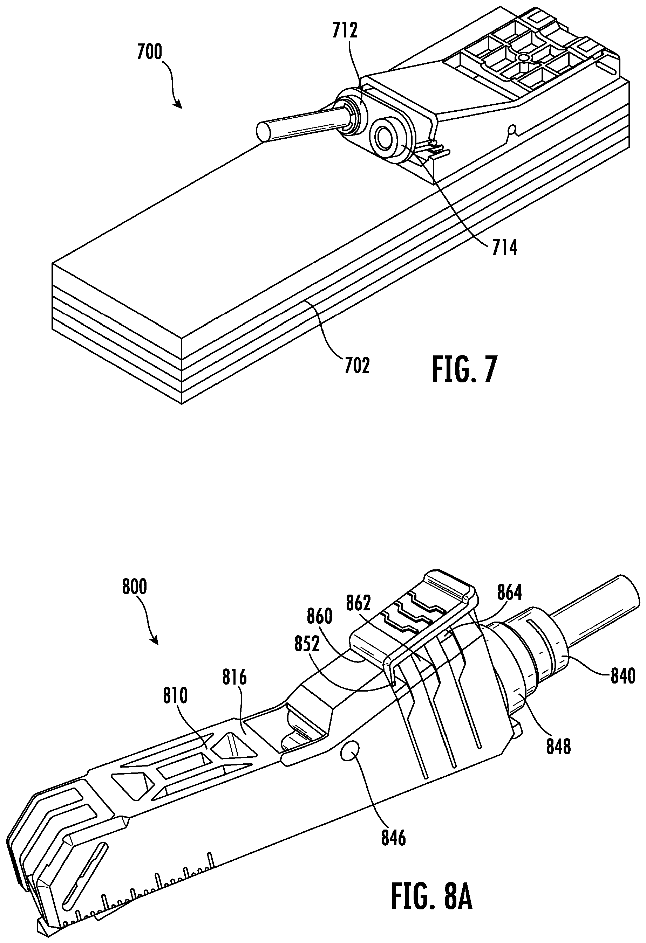

FIG. 7 illustrates another embodiment of a pocket hole jig 700 disposed on a workpiece 702, e.g., a piece of wood. The pocket hole jig 700 depicted in FIG. 7 can have any one or more features as described with respect to the pocket hole jig 100 described in conjunction with FIGS. 1 to 6. However, the pocket hole jig 700 depicted in FIG. 7 includes a first drill bit guide 712 and a second drill bit guide 714 that are disposed side-by-side and rotate in unison in a manner similar to the drill bit guide 140 of the pocket hole jig 100 shown in FIGS 1 to 6. It should be understood that the pocket hole jigs described herein can be single hole pocket jigs or multi-hole pocket jigs including, e.g., two or more guides for drilling pocket holes.

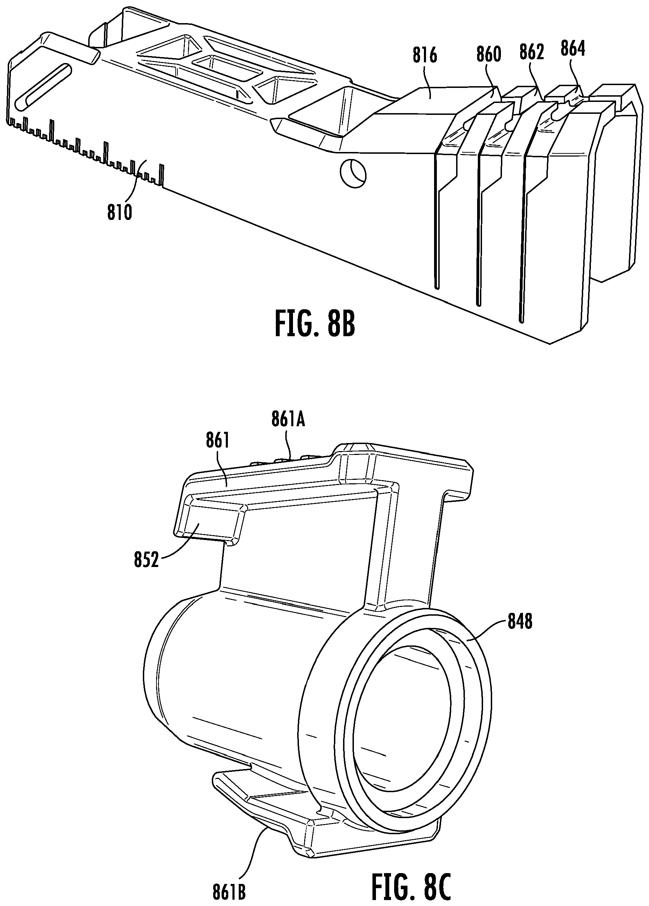

FIGS. 8A to 8C illustrate another embodiment of a pocket hole jig 800. The pocket hole jig 800 depicted in FIGS. 8A to 8C can have any one or more features as described with respect to the pocket hole jigs 100 and 700 described in conjunction with FIGS. 1 to 7. However, unlike the pocket hole jigs 100 and 700, the pocket hole jig 800 in FIGS. 8A to 8C includes a plurality of locking notches, e.g., a first locking notch 860, a second locking notch 862, and a third locking notch 864, disposed on a top 816 of a housing 810 of the pocket hole jig 800. During use, the user can change a material thickness setting by pulling out a spring-loaded bushing 848 and rotating a drill bit guide 840 about an axle 846, to align a locking tab 852 of the spring-loaded bushing 848 with one of the locking notches 860, 862 or 864 and then releasing the spring-loaded bushing 848 to allow the locking tabs 852 to slide into the selected locking notch 860, 862 or 864.

In an embodiment, the spring-loaded bushing 848 can include one or more user interfaces 861 which allow the operator to easily grasp and maneuver the spring-loaded bushing 848 between the locking notches 860, 862 and 864. In the depicted embodiment, the user interfaces 861 include an upper user interface 861A and a lower user interface 861B. The upper user interface 861A can be disposed above the top 816 of the body 810 while the lower user interface 861B can extend through a lower opening 863 in the body 810. The drill bit guide 840 (FIG. 8A) can pass between the upper and lower user interfaces 861A and 861B.

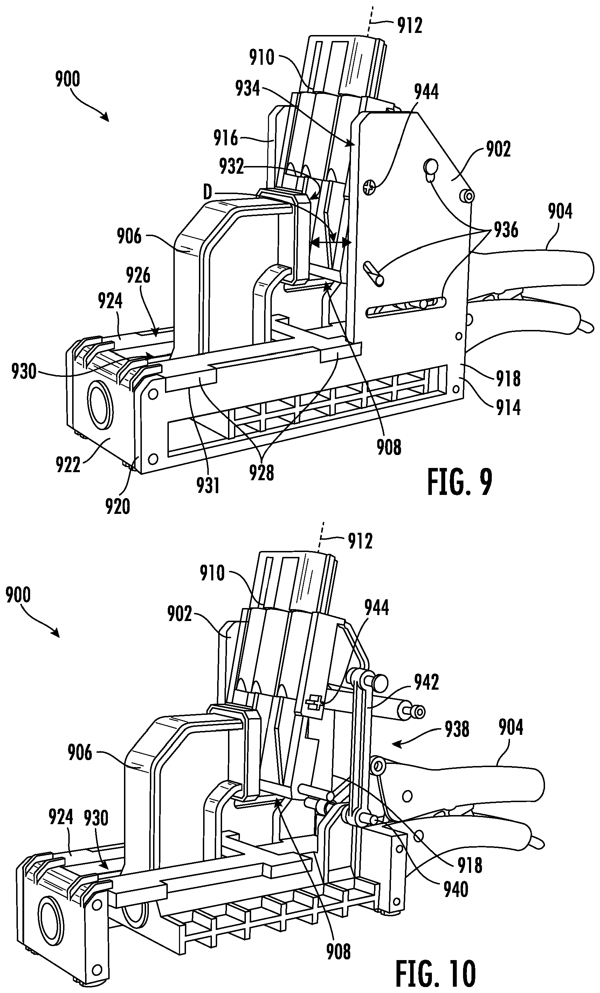

FIGS. 9 to 15 illustrate a pocket hole jig according to the present invention. The pocket hole jig 900 illustrated in FIGS. 9 to 15 is an automatic pocket hole jig. As used herein, the term "automatic pocket hole jig" refers to a tool which automatically clamps to an object which is to receive one or more pocket holes while also self-aligning an axis for drilling the pocket hole(s), where self-alignment can be referenced based on the size of the object being clamped. The automatic pocket hole jig may allow an operator to clamp and lock on to an object using a single hand to support the pocket hole jig 900. That is, the pocket hole jig 900 does not require the use two hands to operate, thus allowing the operator to grasp the object in their unused, other hand. Additionally, the pocket hole jig 900 can be locked in the clamped position, i.e., with an object clamped by the pocket hole jig 900, using the same actuating mechanism as used to clamp the object. Moreover, the pocket hole jig 900 may be brought to already-formed furniture and cabinets and used in-situ rather than requiring movement of the furniture to a fixed working area or disassembly of the furniture altogether.

Referring initially to FIGS. 9 to 11, the pocket hole jig 900 can generally include a body 902, an actuator 904 operatively coupled to the body 902, a clamp head 906 moveable relative to the body to selectively secure an object (not illustrated) in a clamping region 908 of the pocket hole jig 900, and a drill guide 910 defining a guide axis 912 for a drill bit (not illustrated) which can be guided by the drill guide 910 into the object. The drill guide 910 can define a single pocket hole jig defining one guide axis 912 or a multi-pocket hole jig having a plurality of guide axis 912. In certain instances, the guide axis 912 can be formed in a portion of the drill guide 910 which is adjustable, e.g., reversible. In such a manner, the operator can adjust a spacing between the guide axis 912 and the body 902 or between adjacent guide axis 912.

In an embodiment, the body 902 can include a single-piece construction including, e.g., a single-piece sidewall. In another embodiment, the body 902 can include a multi-piece construction. For example, referring to FIG. 9, the body 902 can include a first portion 914 and a second portion 916. In some instances, the first and second portions 914 and 916 can share any one or more of shape, size, or layout. The first and second portions 914 and 916 can be spaced apart from one another to define an area for the clamp head 906 and the drill guide 910.

The body 902 can define a proximal end 918 and a distal end 920. An end block 922 can be disposed at the distal end 920. The end block 922 can extend between the first and second portions 914 and 916 of the body 902 and couple the first and second portions 914 and 916 together. In an embodiment, the first and second portions 914 and 916 can be further coupled together through a top 924. By way of non-limiting example, the top 924 can include a generally planar exposed surface 926 and a plurality of outwardly extending tabs 928. The tabs 928 can seat within corresponding grooves 931 in the first and second portions 914 and 916 of the body 902. The top 924 can include an opening 930 through which the clamp head 906 can extend. While the top 924 is depicted as an upper surface of the pocket hole jig 900, in accordance with other, non-illustrated embodiments, the top 924 through which the clamp head 906 extends through can be disposed at another surface of the pocket hole jig 900 (e.g., at a side surface) or face another direction.

The clamping region 908 may be at least partially defined by the surface 926 and a clamp face 932 of the clamp head 906. As the clamp head 906 moves within the opening 930, i.e., translates between the proximal end 918 and distal end 920 of the body, a distance D between the clamp face 932 and a support surface 934 against which the object is clamped changes. When the pocket hole jig 900 is in the open position with the clamp head 906 nearest the distal end 920, the distance D is at its largest dimension. By way of non-limiting example, distance D at its largest size may be at least 2.54 cm (1 inch), such as at least 5.08 cm (2 inches), such as at least 7.62 cm (3 inches), such as at least 10.16 cm (4 inches), such as at least 12.7 cm (5 inches). When the pocket hole jig 900 is in the closed position without any objects in the clamping region 908, the distance D is smallest and may be less than 2.54 cm ( 1 inch), such as less than 1.27 cm (0.5 inches), such as less than 0.635 cm (0.25 inches), or even 0 cm. With an object in the clamping region 908 and the actuator 904 closed, the distance D is generally equal to the thickness of the object in a direction parallel with the distance D.

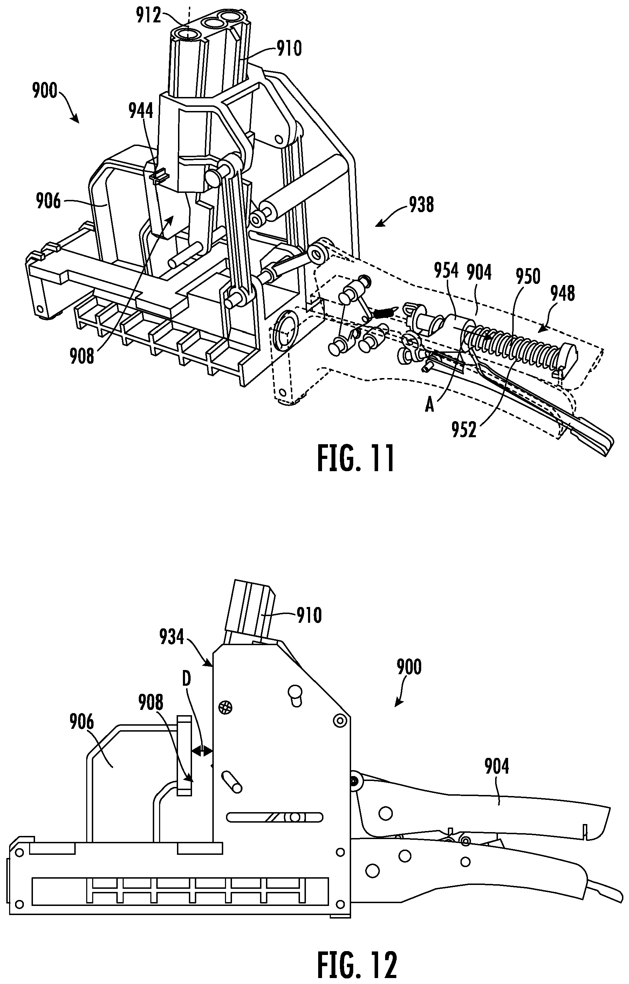

As shown in FIG. 9, the body 902 includes one or more delimiting features, e.g., a plurality of slots 936, which guide movement of an adjustment mechanism 938 (FIGS. 10 and 11). Guided by the delimiting feature(s), the adjustment mechanism 938 moves the clamp head 906 as the actuator 904 is moved between an open position and a closed position. The closed position is shown in FIGS. 9 to 11 and described below in greater detail.

The adjustment mechanism 938 can generally include a first connector 940 linking the actuator 904 and the clamp head 906 together and a second connector 942 linking the actuator 904 and the drill guide 910 together. In certain instances, the second connector 942 can link the actuator 904 and the drill guide 910 together through the first connector 940.

As illustrated in FIG. 10, the first connector 940 can include a generally T-shaped body with arms extending through openings in the clamp head 906. As depicted, the clamp head 906 can extend through the opening 930 in the top 924 and towards the actuator 904. The first connector 940 can extend through the clamp head 906 and interface with the second connector 942 which extends to the drill guide 910. As the actuator 904 is moved from the open position to the closed position, the first actuator 940 can translate the clamp head 906 toward the proximal end 918 of the body 902. The second connector 942, as a result of being linked with the first actuator 940, can pivot the drill guide 910, e.g., simultaneously, about a rotational axis 944. Thus, movement of the actuator 904 from the open position to the closed position tightens the clamp head 906 against the object in the clamping region 908. As described in greater detail below, movement of the actuator 904 to the closed position can also lock the clamp head 906 in a tightened state against the object. That is, the actuator 904 can both tighten the clamp head 906 and lock the object in the clamping region 908. As further described in greater detail below, movement of the actuator 904 to the closed position can also pivot the drill guide 910 about the rotational axis 944.

In the embodiment depicted in FIG. 10, the first connector 940 independently connects with each of the clamp head 906 and the second connector 942. That is, both the clamp head 906 and the second connector 942 directly interface with the first connector 940. In other embodiments, the first connector 940 can indirectly interface with at least one of the clamp head 906 or the second connector 942, e.g., through the other of the clamp head 906 or the second connector 942. It should be understood that the embodiments illustrated in FIGS. 9 to 15 are exemplary and not intended to limit the scope of the disclosure.

The pocket hole jig 900 can further include a support arm 946. In an embodiment, the support arm 946 is coupled to the body 902. For example, the support arm 946 can be a discrete component statically coupled to the body 902. In another embodiment, the support arm 946 can be integral with the body 902. For example, the support arm 946 can extend in a direction generally parallel with a best fit line of the actuator 904 as seen in the closed position. The combination of the actuator 904 and the support arm 946 can form a squeezable interface for moving the actuator 904 to the closed position. An operator can wrap their hand around the actuator 904 and the support arm 946 to generate leverage to squeeze the actuator 904 to the closed position. By applying pressure, the actuator 904 pivots to the closed position. Conversely, the actuator 904 pivots in a reverse direction when moving to the open position. In certain instances, reverse movement may be spring assisted using, e.g., a spring-biased interface 948 described in greater detail below.

While the clamping region 908 may receive objects of differing size in a direction parallel with the distance D (FIG. 9), in accordance with an embodiment the actuator 904 may always return to a substantially same closed position as measured relative to the support arm 946. That is, in the closed position, the actuator 904 may be in substantially the same position relative to other structure of the pocket hole jig 900, e.g., the support arm 946 or the body 902, regardless of the size of the object in the clamping region 908. In one or more embodiments, fully closing the actuator 904 to the closed position with differing sized objects contained in the clamping region 908 can be facilitated by the spring-biased interface 948 (FIG. 11).

The spring-biased interface 948 can couple the actuator 904 to the body 902. In the depicted embodiment, the spring-biased interface 948 indirectly couples the actuator 904 to the body 902 through the support arm 946. In an embodiment, the spring-biased interface 948 includes a rod 950 and a spring 952 extending parallel with the rod 950, e.g., concentrically arranged, and biasing a carrier 954. The carrier 954 moves in direction A and compresses the spring 952 to allow the actuator 904 to move to the closed position once the clamp head 906 is in a tightened state relative to the object in the clamping region 908. That is, once compression force exhibited by the clamp head 906 onto the object reaches a critical threshold to overcome the force of the spring 952 against the carrier 954, the spring 952 deflects in direction A to absorb additional travel of the actuator 904 until the actuator 904 reaches the closed position. It should be understood that the spring 952 may also deflect during actuation of the actuator 906 prior to reaching the critical threshold. However, at the critical threshold, all additional force applied to the actuator 904 to move the actuator 904 to the closed position may be taken up by the spring 952.

While the clamp head 906 is in motion, the drill guide 910 can rotate about the rotational axis 944. For example, the adjustment mechanism 938 can link the clamp head 906 and drill guide 910 together. As such, movement of one of the clamp head 906 or drill guide 910 can affect movement of the other one of the clamp head 906 or drill guide 910. As described above, the spring-biased interface 948 allows for continued actuation of the actuator 904 to the closed position after the object is clamped in the clamping region 908. Thus, in certain instances the actuator 904 can move (e.g., from the open position to the closed position) without the clamp head 906 or drill guide 910 moving. In this regard, the drill guide 910 is always referenced to the dimension of the object in the clamping region 908.

For instance, referring again to FIG. 9, the distance D between the clamp face 932 and the support surface 934 is generally set by the size of the object clamped in the clamping region 908. That is, as the actuator 904 is closed, the distance D assumes the dimension of the object contained in the clamping region 908. After the clamp head 906 reaches the tightened state against the object, the actuator 904 can continue to move towards the closed position while the distance D remains unchanged. By rotating the drill guide 910, the angle of the guide axis 912 self-adjusts in view of the distance D set by the object. For narrow objects, e.g., having relatively smaller dimensions in the direction of distance D, the drill guide 910 can assume a steeper angle, i.e., the guide axis 912 can orient more perpendicular to the direction of distance D. For thicker objects, e.g., having relatively larger dimensions in the direction of distance D, the guide axis 912 can assume a shallower angle, i.e., the guide axis 912 can orient to be less perpendicular to the direction of distance D. As the angle of the guide axis 912 relative to the direction of the distance D increases, e.g., as a result of clamping a narrow object, the plunge depth of the drill bit (not illustrated) in the drill guide 910, as measured parallel with respect to the distance D, decreases. Thus, the drill bit does not penetrate through a back side of the object. Conversely, as the angle of the guide axis 912 relative to the direction of the distance D decreases, e.g., as a result of clamping a thick object, the plunge depth of the drill bit (not illustrated) in the drill guide 910, as measured parallel with respect to the distance D, increases. Thus, the drill bit penetrates deeper into the object (without penetrating through the back side of the object) to create a more robust pocket hole.

In an embodiment, movement of the actuator 904 to the closed position causes the drill guide 910 to pivot until the clamp head 906 is in a tightened state against the object in the clamping region 908 after which point the drill guide 910 does not further rotate upon additional movement of the actuator 904. As described above, the lack of additional movement of the drill guide 910 can also be attributed to the adjustment mechanism 138 and the spring-biased interface 948.

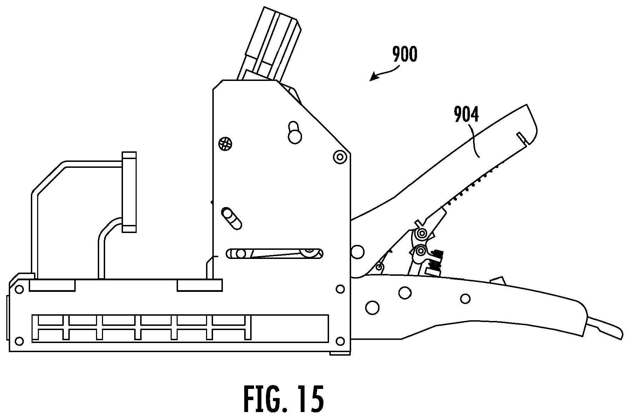

Referring now to FIGS. 12 to 15, side views of the pocket hole jig 900 are provided depicting the pocket hole jig 900 with the actuator in various stages of movement between the closed position (FIG. 12) and the open position (FIG. 15).

Referring initially to FIG. 12, the pocket hole jig 900 is shown with the actuator 904 in the closed position without an object in the clamping region 908. As depicted in FIG. 12, the clamp head 906 is spaced apart from the support surface 934 by a smallest distance D. Meanwhile, the drill guide 910 is oriented at a steepest angle as measured with respect to the distance D.

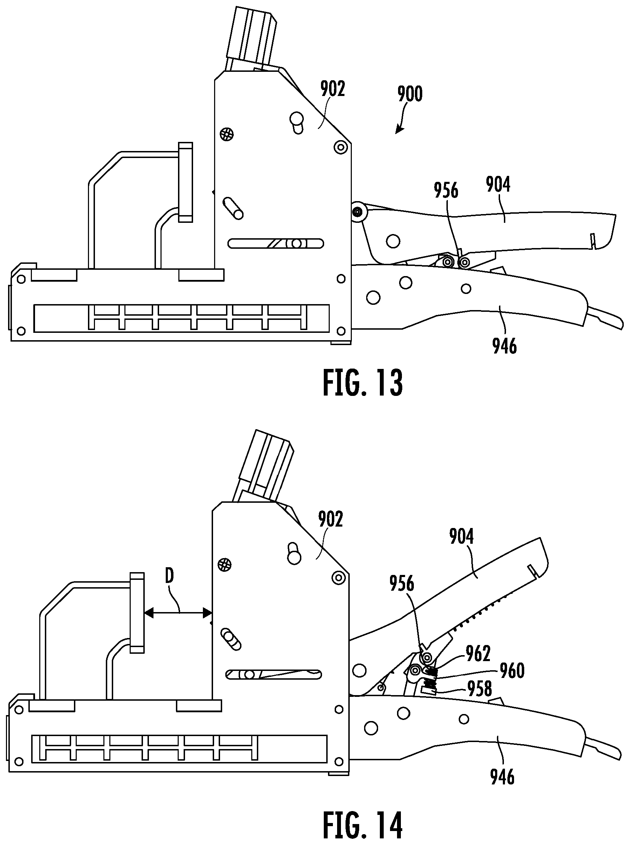

FIGS. 13 and 14 depict the pocket hole jig 900 as the actuator 904 is moved from the closed position towards the open position. As shown, the actuator 904 can be coupled to the support arm 946 or body 902 through an adjustable interface 956 which allows for fine-tuning of the position of the actuator 904. That is, the adjustable interface 956 can allow the operator to set different closed positions. For example, the adjustable interface 956 can include a threaded element 958 which, in combination with a threaded receiver 960 and a stop surface 962, forms a stop against additional travel of the actuator 904. By moving the threaded element 958 relative to the threaded receiver 960, the stop position of the actuator 904 changes. In this regard, the pocket hole jig 900 can be customized by the user based on their hand size, the object being operated on, or both.

As seen in FIGS. 12 to 14, the distance D of the clamping region 908 increases as the actuator 904 is opened. FIG. 15 depicts the pocket hole jig 900 as seen with the actuator 904 in the fully open position. The adjustable interface 956 may generate a tactile indication to the operator when the actuator 904 is in the open position as depicted in FIG. 15. In certain instances, an initial force required to move the actuator 904 from the open position towards the closed position can be greater than the force required at any additional point of travel in the actuator's movement to the closed position.

As depicted in FIGS. 12 to 15, movement of the actuator 904 is performed in a pivotable manner. That is, the actuator 904 moves through rotation. In an embodiment, the pocket hole jig 900 excludes the use of user operable features which move through linear translation. In this regard, the pocket hole jig 900 can be clamped onto an object by pivoting the actuator 904 to the closed position. Once in the closed position, the actuator 904 can lock the clamp head 906 against the object in the clamping region 908 without the use of any secondary locking elements or features. In this regard, the actuator 904 is lockable in the closed position using a single hand.

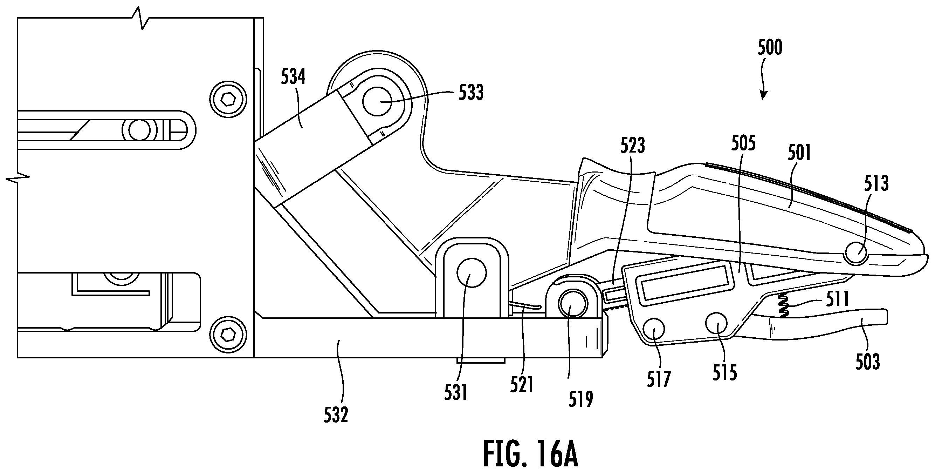

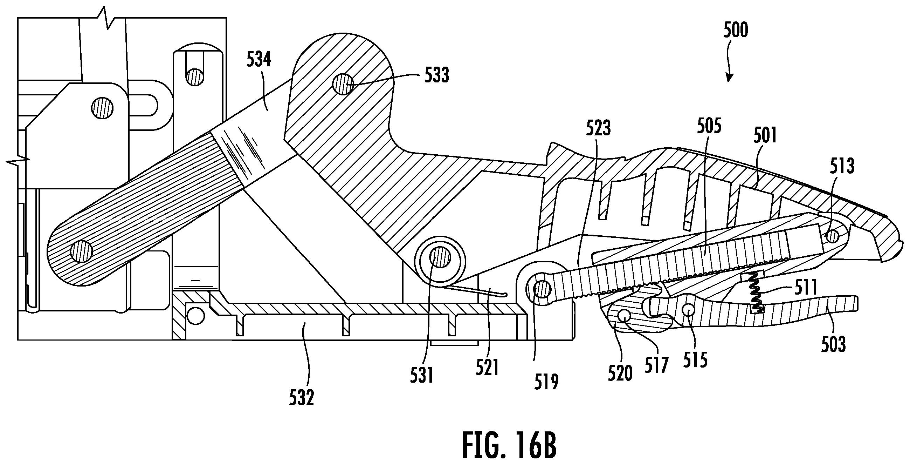

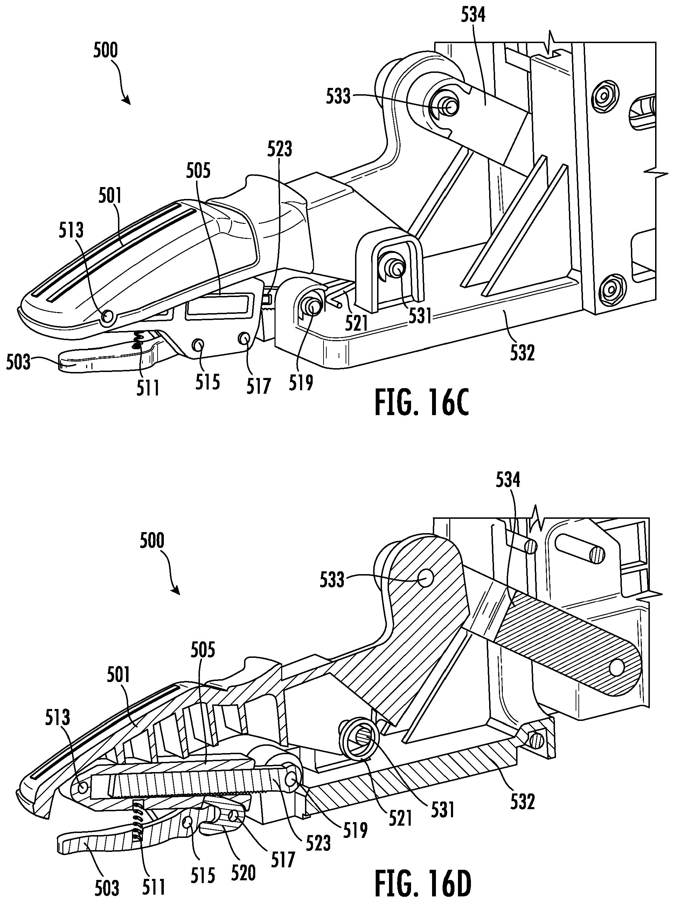

FIGS. 16A-16D show an alternate actuator 500 according to one or more embodiments. Specifically, FIG. 16A shows a side view of the actuator 500, FIG. 16B shows a side cross-sectional view of the actuator 500, FIG. 16C shows a perspective view of the actuator 500, and FIG. 16D shows a perspective cross-sectional view of the actuator 500, according to one or more embodiments. Descriptions of portions that are shown in previous figures are omitted. The actuator 500 includes a handle 501 that includes a gripping portion at a rear thereof, a center portion that is rotatably attached to a base 532 via a hinge 531, and a rear portion that is rotatably attached to a rotatable linkage 534 via a hinge 533. A spring 521 may be formed around the hinge 531 with an end of the spring 521 butting a top surface of the base 532. The gripping portion of the handle 501 is rotatably attached to a rotatable actuator linkage 505 via a hinge 513. A bar 523 is slidably disposed within the rotatable actuator linkage 505, with a rear portion of the bar 523 protruding from the rotatable actuator linkage 505. A rear end of the bar 523 is rotatably attached to the base 532 via a hinge 519. A release lever 503 is rotatably attached to a bottom portion of the rotatable actuator linkage 505 via a hinge 515, and a spring 511 is disposed between a bottom of the rotatable actuator linkage 505 and a top of the release lever 503. A ratchet 517 is rotatably attached to a rear bottom portion of the rotatable actuator linkage 505. According to one or more embodiments, the bar 523 has a ridged bottom surface.

As shown in Figs. 16B and 16D, a top surface of the ratchet 517 abuts a bottom surface of the bar 523. Thus, friction between the ratchet 517 and the bar 523 prevents relative sliding movement of the bar 523 within the rotating actuator linkage 505, keeping the actuator 500 in position. When a user actuates the actuator 500 by squeezing the release lever 503 towards the handle 501, a front portion of the release lever 503 in front of the hinge 515 rotates upward, while a rear portion of the release lever 503 to the rear of the hinge 515 rotates downward. As the rear portion of the release lever 503 moves downward, a rear end of the release lever 503 that is slotted within the ratchet 520 pushes and rotates a front portion of the ratchet 520 downward, moving the top surface of the ratchet 520 away from the bottom surface of the bar 523, allowing relative sliding movement of the bar 523 within the rotating actuator linkage 505, releasing the actuator 500. This allows a user to push the handle 501 downward such that the front portion of the handle 501 rotates downward about the hinge 531, which in turn rotates the rear portion of the handle 501 upwards about the hinge 531. The upward rotation of the rear portion of the handle 501 pulls a front end of the rotatable linkage 534 upwards and frontwards to actuate the clamp and rotate the drill guide as shown in and described with respect to FIGS. 9-15. Once the user releases the release lever 503, the spring 511 pushes the release lever away from the rotatable actuator linkage 505 so that the rear end of the release lever 503 rotates the ratchet 520 about the hinge 517, and the top surface of the ratchet 520 comes into contact with the bottom surface of the bar 523 to lock the bar 523 within the rotatable actuator linkage 523 via friction. According to one or more embodiments, the frictional forces may be increased via the aforementioned ridged bottom surface of the bar 523. To release the clamp, the user may squeeze the release lever 503 towards the handle 501 to release the actuator 500 without pushing down on the handle 501, and the spring 521 biases the handle 501 towards an unclamped position of the actuator 500.

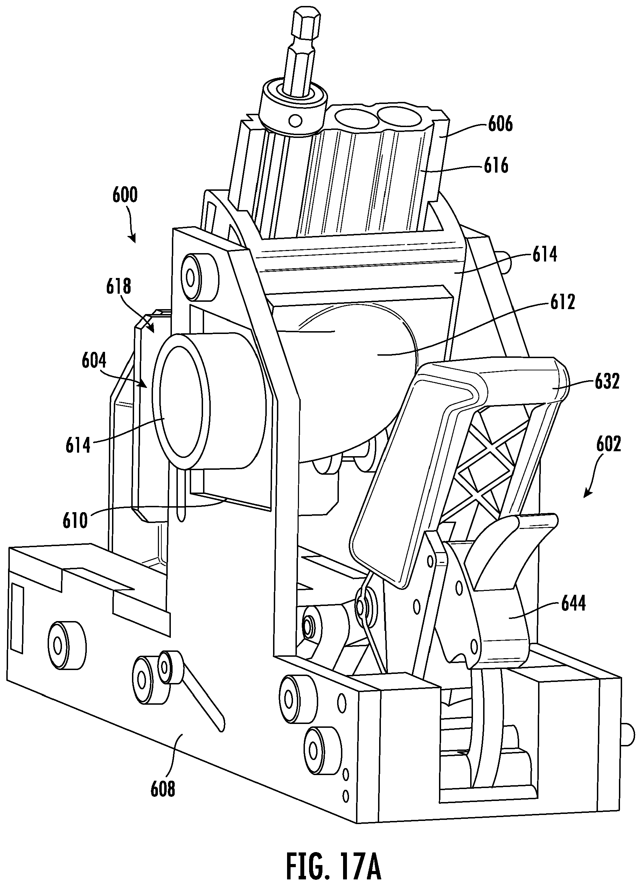

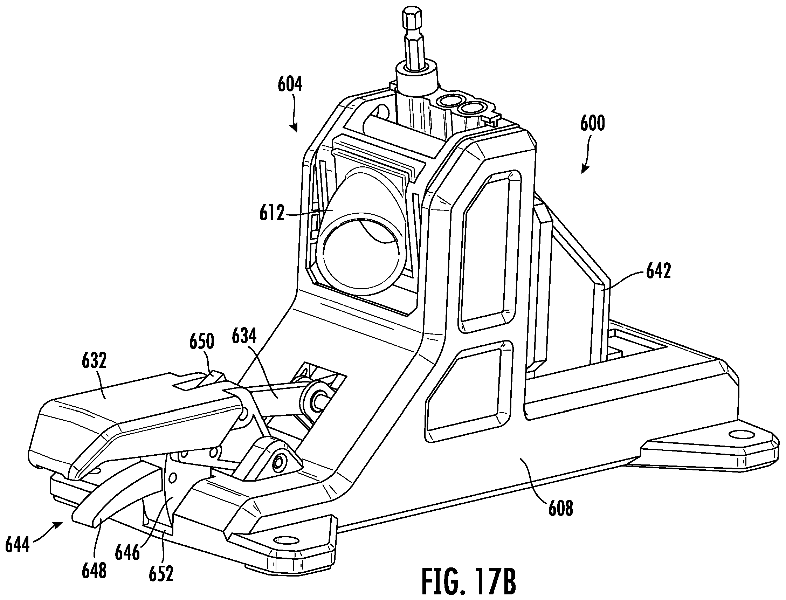

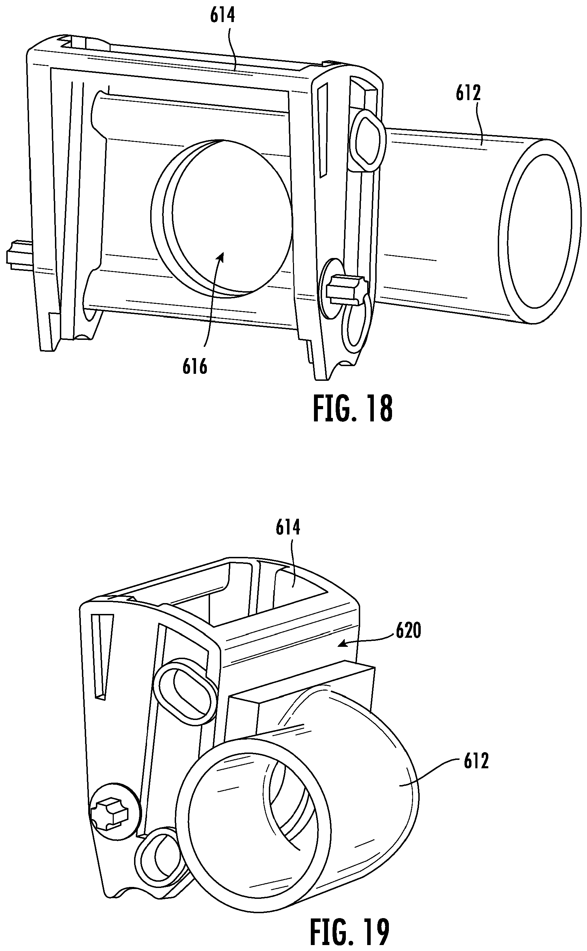

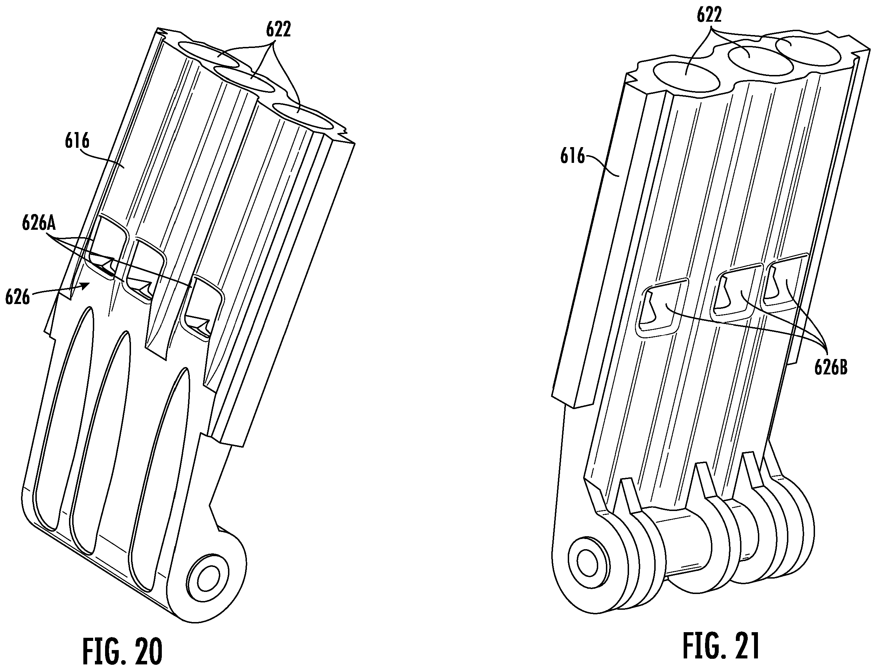

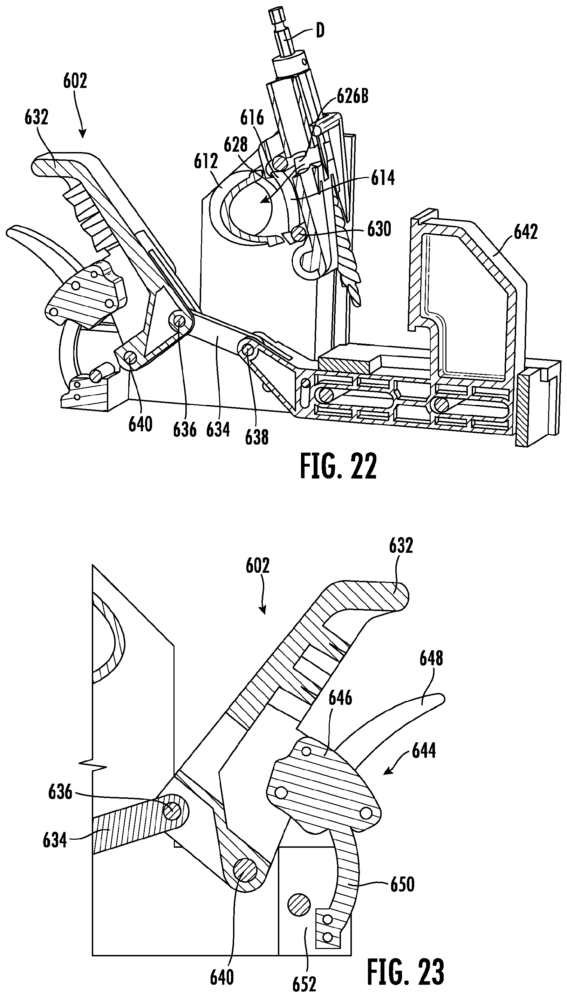

FIGS. 17A-23 show an alternate pocket hole jig 600 including an actuator 602 and a dust extraction element 604 according to one or more embodiments. Specifically, FIGS. 17A and 17B show perspective rear views of the actuator 602 and dust extraction element 604 in accordance with different embodiments, FIG. 18 shows a front end of a drill guide 606 to which the dust extraction element 604 is coupled, FIG. 19 shows a side view of the dust extraction element 604 and drill guide 606, FIG. 20 shows a front perspective view of the drill guide 606, FIG. 21 shows a rear perspective view of the drill guide 606, FIG. 22 shows a cross-sectional perspective view of the pocket hole jig 600, and FIG. 23 shows a side cross-sectional view of the actuator 602 according to one or more embodiments. Descriptions of portions that are shown in previous figures are omitted.

As shown in FIG. 17A, a body 608 of the pocket hole jig 600 can define an opening, such as a cutout 610 through which the dust extraction element 604 can pass. In an embodiment, the dust extraction element 604 can include a conduit 612 in fluid communication with a location of the pocket hole jig 600 where dust and debris are generated as a result of one or more drilling operations. The conduit 612 can have an internal diameter of at least 5 millimeters (mm), such as at least 10 mm, such as at least 20 mm, such as at least 25 mm, such as at least 30 mm, such as at least 35 mm. The conduit 612 can have an outer diameter slightly larger than the internal diameter. In an embodiment, the cutout 610 can be larger than the outer diameter of the conduit 612 to allow for relative movement of the conduit 612 with respect to the body 618 as may be encountered with the drill guide 606 at different angular orientations. In an embodiment, the conduit 612 can freely move relative to the cutout 610. That is, the conduit 612 may not be fixedly coupled to the body 608. In other embodiments, the conduit 612 can be fixed to the body 608 to prevent relative movement therebetween.

In one or more embodiments, the conduit 612 can include a relatively rigid material adapted to maintain sidewall structural integrity under load. For example, the conduit 612 can be formed from a rigid plastic, metal, an alloy, or the like. In other embodiments, the conduit 612 can include a relatively flexible material adapted to deform under load. For example, the conduit 612 can include a portion of flexible hose. The flexible hose can be reinforced, e.g., with an internal wire mesh or helical spring lining or embedded within the hose.

Dust and debris can pass through the conduit 612 to exit the pocket hole jig 600 and prevent buildup of dust and debris on the pocket hole jig 600. In some instances, a terminal end 614 of the conduit 612 can be shaped or sized to receive a hose connection (not illustrated). For example, the terminal end of the conduit 612 can have a tapered shape to allow for installation of the hose connection therewith. The hose connection can be part of a terminal end of a vacuum hose extending from a vacuum generating source. In certain instances, the terminal end can positively engage with the hose connection. For example, the terminal end can include features to form an interference with the hose connection, a bayonet connection, or the like. When active, the vacuum generating source can generate enough suction through the conduit 612 to draw dust and debris from the pocket hole jig 600.

The drill guide 606 can include a carrier 614 and a drill guiding element 616 operably coupled to the carrier 614. The carrier 614 can be coupled to the body 608 in a manner to allow rotation relative to the body 608. The drill guiding element 616 can move relative to the carrier 614.

FIG. 17B illustrates an embodiment of the pocket hole jig 600 where the dust extraction element 604, i.e., the conduit 612 of the dust extraction element 604, does not pass through a cutout 610 like as shown in FIG. 17A, but instead passes around the body 608.

Referring to FIGS. 18 and 19, the carrier 614 can define an aperture 616 through which dust and debris can pass. In an embodiment, the aperture 616 can extend through the carrier 614 in a front-to-back orientation such that dust and debris can escape from a drilling zone 618 (FIG. 17A) to a rear side of the pocket hole jig 600. The illustrated aperture 616 is circular. In other embodiments, the aperture 616 can have another shape, such as a polygonal shape, an ovular shape, an arcuate shape, or a shape including linear and polygonal segments. The aperture 616 can be sized to match or be similar to the internal diameter of the conduit 612 to prevent buildup of dust within the conduit during suction. The conduit 612 can be coupled at or adjacent to a back side 620 of the carrier 614 such that vacuum pressure generated by the vacuum generating source draws dust and debris through the aperture 616 and into the conduit 612. In a particular embodiment, the conduit 612 can be removably coupled to the back side 620 of the carrier 614. For example, the conduit 612 can be coupled to the carrier 614 using one or more fasteners (e.g., threaded fasteners), a slotted interface whereby the conduit 612 is slid on and off rails disposed on the carrier 614, through a bayonet connection, or the like. The conduit 612 may be removable from the carrier 614 for cleaning or inspection.

The conduit 612 can extend from the carrier 614 in a generally horizontal direction. In some instances, the conduit 612 can have a generally L-shaped configuration. In other embodiments, the conduit 612 can define a generally straight shape, can include one or more arcuate portions, can include one or more linear segments, or any combination thereof. Use of a relatively straight, i.e., unbent, shape may reduce drag associated with suction through the conduit 612. The conduit 612 can extend rearward from the carrier 614 and turn to exit the pocket hole jig 600 through the body 608 prior to reaching the actuator 600 (FIG. 17A). Alternatively, the conduit 612 can pass around the body 608 and not extend therethrough (FIG. 17B).

FIGS. 20 and 21 illustrate front and back views of the drill guiding element 616 in accordance with an embodiment. Specifically, FIG. 20 illustrates a front perspective view of the drill guiding element 616 and FIG. 21 illustrates a rear perspective view of the drill guiding element 616 in accordance with an embodiment. The drill guiding element 616 can include insertion openings 622 into which drill bits D (FIG. 22) can be inserted. The drill bits D can enter elongated openings within the drill guiding element 616 through the insertion openings 622 and exit the elongated openings of the drill guiding element 616 at exit openings 624. As the drill bit moves within a workpiece, e.g., wood held by the pocket hole jig 600, dust is generated as material is removed from the workpiece. Left uncollected, the dust, often referred to as sawdust, would accumulate on the pocket hole jig 600 making further use of the pocket hole jig 600 difficult. To mitigate accumulation of dust, the drill guiding element 616 can include vents 626. The vents 626 can be disposed along the length of the elongated openings between the insertion opening 622 and the exit openings 624. In some instances, the drill guiding element 616 includes a plurality of elongated openings. Each one of the elongated openings can include one or more vents 626. Alternatively, the drill guiding element 616 can have a number of vents 626 less than a number of elongated openings. As shown in FIGS. 20 and 21, the drill guiding element 616 includes three elongated openings and three vents 626. The vents 626 can each include a first-side vent 626A and a second-side vent 626B. The first-side vent 626A can be located on a first side of the drill guiding element 616 and the second-side vents 626B can be located on a second side of the drill guiding element 616, where the second side is opposite the first side. Dust generated by the workpiece can pass from the workpiece, through the first-side vents 626A and exit the drill guiding element 616 through the second-side vents 626B. Additionally, dust which is removed from the workpiece through flutings within the drill bit D itself can pass through the second-side vents 626B.

As shown in FIG. 22, the second-side vents 626B can be aligned with the aperture 616 in the carrier 614 such that dust passing through the second-side vents 626B enters the conduit 612 and exits from the pocket hole jig 600 in a direction shown by arrow 628. In some instances, the pocket hole jig 600 can include a sealing element 630, or a plurality of sealing elements, sealing between components of the pocket hole jig 600. Sealed connections can increase suction forces at the vents 626 which can, in turn, increase overall dust and debris removal during drilling operations.

Referring to FIGS. 17A, 17B, 22 and 23, the actuator 602 includes a handle 632 with a gripping portion at a rear thereof, a center portion that is rotatably attached to the body 608 through a rotatable linkage 634 connected to the handle 632 by a first hinge 636 and connected to the body 608 by a second hinge 638. The handle is depicted in FIGS. 17A, 22 and 23 in an unbiased state, as seen with the pocket hole jig 600 in an open state whereby it can receive a workpiece. After a workpiece is inserted into the pocket hole jig 600, the handle 632 is rotated about a pivot axis 640 causing the linkage 634 to pull a clamp head 642 to a closed state against the workpiece (FIG. 17B).

The pocket hole jig 600 can further include a safety 644. The safety 644 can prevent the pocket hole jig 600 from prematurely moving from the open state to the closed state, for example, as a result of an operator accidently applying force to the handle 632. The safety 644 can include an element 646 coupled to the handle 632. In an embodiment, the element 646 is fixedly coupled to the handle 632. A user-engageable portion 648 for a user to grasp the safety 644 can be coupled to the element 646. A locking element 650 can be coupled with the user-engageable portion 648 and extend towards and interfaces with the body 608, or a component coupled therewith, to prevent relative movement of the handle 632 when the user-engageable portion 648 is in the locked state (as shown in FIGS. 17A, 22 and 23). To unlock the safety 644, the user-engageable portion 648 is moved from the locked state by applying force to the user-engageable portion 648. Application of this force causes the user-engageable portion 648 to move towards the handle 632. Simultaneously, the locking element 650 can clear a restriction 652 associated with the body 608, or a component coupled therewith. With the safety 644 in the unlocked state, the operator can then apply pressure on the handle 632 to move the clamp head 642 and tighten the workpiece as shown in FIG. 17B. Once unlocked and after some initial movement of the handle 632, the safety 644 can remain in the unlocked position throughout the remainder of the stroke of the handle 632. The operator can thus release the safety 644 after beginning to tighten the workpiece but before the workpiece is fully tightened. When the handle 632 is returned to the original, unclamped state, the safety 644 can return to the locked state and again prevent movement of the handle 632 until the safety 644 is again depressed.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A pocket hole jig (600, 900) comprising:
a body (608,902) defining a proximal end (918) and a distal end (920);
an actuator (500, 602, 904) operatively coupled to the body;
a clamp head (906) movable relative to the body (608, 902) to selectively secure an object in a clamping region (908) of the pocket hole jig (600, 900); and
a drill guide (606, 910) defining a guide axis for a drill bit,
wherein the actuator (500, 602, 904) is moveable between an open position and a closed position,
wherein movement of the actuator (500, 602, 904) from the open position to the closed position translates the clamp head (642, 906) towards the proximal end (918) of the body (608, 902),
wherein movement of the actuator (500, 602, 904) from the open position to the closed position tightens the clamp head (642, 906) against the object and locks the clamp head (642, 906) in a tightened state against the object, wherein
the drill guide (606, 910) is pivotable relative to the body (608, 902) and wherein movement of the actuator (500, 602, 904) pivots the drill guide (606, 910) relative to the body.

2. The pocket hole jig (600, 900) of any one of the preceding claims, further comprising a support arm (946) which, in combination with the actuator (500, 602, 904), forms a squeezable interface for moving the actuator (500, 602, 904) to the closed position.

3. The pocket hole jig (600, 900) of claim 2, wherein the closed position for the actuator (500, 602, 904), as measured relative to the support arm (946), is substantially the same regardless of a size of the object in the clamping region (908).

4. The pocket hole jig (600, 900) of any one of the preceding claims, wherein the actuator (500, 602, 904) is coupled to the body (608, 902) through a spring-biased interface (948) configured to take up any additional travel of the actuator (500, 602, 904) to the closed position once the clamp head (642, 906) is in the tightened state against the object in the clamping region (908).

5. The pocket hole jig (600, 900) of any one of the preceding claims, wherein a first portion of the movement of the actuator (500, 602, 904) from the open position to the closed position tightens the clamp head (642, 906) against the object, and wherein a second portion of the movement of the actuator (500, 602, 904) locks the clamp head (642, 906) in the tightened state.

6. The pocket hole jig (600, 900) of any one of the preceding claims, wherein movement of the actuator (500, 602, 904) comprises pivotable movement.

7. The pocket hole jig (600, 900) of any one of the preceding claims, further comprising a dust extraction element (604) coupled to the drill guide (606, 910).

8. The pocket hole jig (600, 900) of claim 1, wherein movement of the actuator (500, 602, 904) from the open position to the closed position pivots the drill guide (606, 910) and locks the drill guide (606, 910) with the guide axis at a specified alignment with respect to the clamping region (908).

9. The pocket hole jig (600, 900) of claim 8, wherein movement of the actuator (500, 602, 904) from the open position to the closed position tightens the clamp head (906) against the object and locks the clamp head (906) in a tightened state against the object.

10. The pocket hole jig (600, 900) of any one of claims 8 or 9, wherein the actuator (500, 602, 904) is coupled to the body (608, 902) through a spring-biased interface (948) configured to take up any additional travel of the actuator (500, 602, 904) to the closed position once the clamp head (906) is in a tightened state against the object in the clamping region (908).

11. The pocket hole jig (600, 900) of any one of claims 8-10, wherein movement of the actuator (500, 602, 904) causes the drill guide (606, 910) to pivot until the clamp head (906) is in a tightened state against the object in the clamping region (908) after which point the drill guide (606, 910) does not further pivot upon additional movement of the actuator (500, 602, 904).

12. The pocket hole jig (600, 900) of any one of claims 8-11, further comprising an adjustment mechanism (938) connecting the actuator (500, 602, 904), the clamp head (906), and the drill guide (606, 910) together, wherein motion of the adjustment mechanism (938) is delimited by the body (608, 902).

13. The pocket hole jig (600, 900) of claim 12, wherein the adjustment mechanism (938) comprises:
a first connector (940) linking the actuator (500, 602, 904) and the clamp head (906) together; and
a second connector (942) linking the first connector (940) and the drill guide (606, 910) together.

14. The pocket hole jig (600, 900) of any one of claims 8-13, further comprising a dust extraction element (604) coupled to the drill guide (606, 910).

## Patentansprüche

1. Taschenlochspanneinrichtung (600, 900), umfassend:
einen Körper (608, 902), der ein proximales Ende (918) und ein distales Ende (920) definiert;
eine Betätigungseinrichtung (500, 602, 904), die mit dem Körper wirkgekoppelt ist;
einen Klemmkopf (906), der relativ zu dem Körper (608, 902) bewegbar ist, um ein Objekt selektiv in einem Klemmbereich (908) der Taschenlochspanneinrichtung (600, 900) zu befestigen; und
eine Bohrführung (606, 910), die eine Führungsachse für einen Bohrer definiert,
wobei die Betätigungseinrichtung (500, 602, 904) zwischen einer offenen Position und einer geschlossenen Position bewegbar ist,
wobei eine Bewegung der Betätigungseinrichtung (500, 602, 904) von der offenen Position in die geschlossene Position den Klemmkopf (642, 906) in Richtung des proximalen Endes (918) des Körpers (608, 902) verschiebt,
wobei eine Bewegung der Betätigungseinrichtung (500, 602, 904) von der offenen Position in die geschlossene Position den Klemmkopf (642, 906) gegen das Objekt festzieht und den Klemmkopf (642, 906) in einem festgezogenen Zustand gegen das Objekt verriegelt,
wobei die Bohrführung (606, 910) relativ zu dem Körper (608, 902) schwenkbar ist und wobei eine Bewegung der Betätigungseinrichtung (500, 602, 904) die Bohrführung (606, 910) relativ zu dem Körper schwenkt.

2. Taschenlochspanneinrichtung (600, 900) nach einem der vorhergehenden Ansprüche, ferner umfassend einen Trägerarm (946), der in Kombination mit der Betätigungseinrichtung (500, 602, 904) eine zusammendrückbare Schnittstelle bildet, zum Bewegen der Betätigungseinrichtung (500, 602, 904) in die geschlossene Position.

3. Taschenlochspanneinrichtung (600, 900) nach Anspruch 2, wobei die geschlossene Position für die Betätigungseinrichtung (500, 602, 904), gemessen relativ zu dem Trägerarm (946), im Wesentlichen unabhängig von einer Größe des Objekts in dem Klemmbereich (908) gleich ist.

4. Taschenlochspanneinrichtung (600, 900) nach einem der vorhergehenden Ansprüche, wobei die Betätigungseinrichtung (500, 602, 904) mit dem Körper (608, 902) über eine federbelastete Schnittstelle (948) gekoppelt ist, die eingerichtet ist, um jeden zusätzlichen Weg der Betätigungseinrichtung (500, 602, 904) in die geschlossene Position aufzunehmen, sobald sich der Klemmkopf (642, 906) in dem festgezogenen Zustand gegen das Objekt in dem Klemmbereich (908) befindet.

5. Taschenlochspanneinrichtung (600, 900) nach einem der vorhergehenden Ansprüche, wobei ein erster Teil der Bewegung der Betätigungseinrichtung (500, 602, 904) von der offenen Position in die geschlossene Position den Klemmkopf (642, 906) gegen das Objekt festzieht, und wobei ein zweiter Teil der Bewegung der Betätigungseinrichtung (500, 602, 904) den Klemmkopf (642, 906) in dem festgezogenen Zustand verriegelt.

6. Taschenlochspanneinrichtung (600, 900) nach einem der vorhergehenden Ansprüche, wobei eine Bewegung der Betätigungseinrichtung (500, 602, 904) eine schwenkbare Bewegung umfasst.

7. Taschenlochspanneinrichtung (600, 900) nach einem der vorhergehenden Ansprüche, ferner umfassend ein Staubbeseitigungselement (604), das mit der Bohrführung (606, 910) gekoppelt ist.

8. Taschenlochspanneinrichtung (600, 900) nach Anspruch 1, wobei eine Bewegung der Betätigungseinrichtung (500, 602, 904) von der offenen Position in die geschlossene Position die Bohrführung (606, 910) schwenkt und die Bohrführung (606, 910) mit der Führungsachse in einer bestimmten Ausrichtung in Bezug auf den Klemmbereich (908) verriegelt.

9. Taschenlochspanneinrichtung (600, 900) nach Anspruch 8, wobei eine Bewegung der Betätigungseinrichtung (500, 602, 904) von der offenen Position in die geschlossene Position den Klemmkopf (906) gegen das Objekt festzieht und den Klemmkopf (906) in einem festgezogenen Zustand gegen das Objekt verriegelt.

10. Taschenlochspanneinrichtung (600, 900) nach einem der Ansprüche 8 oder 9, wobei die Betätigungseinrichtung (500, 602, 904) mit dem Körper (608, 902) über eine federbelastete Schnittstelle (948) gekoppelt ist, die eingerichtet ist, um jeden zusätzlichen Weg der Betätigungseinrichtung (500, 602, 904) in die geschlossene Position aufzunehmen, sobald sich der Klemmkopf (906) in einem festgezogenen Zustand gegen das Objekt in dem Klemmbereich (908) befindet.

11. Taschenlochspanneinrichtung (600, 900) nach einem der Ansprüche 8-10, wobei eine Bewegung der Betätigungseinrichtung (500, 602, 904) bewirkt, dass die Bohrführung (606, 910) schwenkt, bis sich der Klemmkopf (906) in einem festgezogenen Zustand gegen das Objekt in dem Klemmbereich (908) befindet, woraufhin die Bohrführung (606, 910) bei einer zusätzlichen Bewegung der Betätigungseinrichtung (500, 602, 904) nicht weiter schwenkt.

12. Taschenlochspanneinrichtung (600, 900) nach einem der Ansprüche 8-11, ferner umfassend einen Einstellmechanismus (938), der die Betätigungseinrichtung (500, 602, 904), den Klemmkopf (906) und die Bohrführung (606, 910) miteinander verbindet, wobei eine Bewegung des Einstellmechanismus (938) durch den Körper (608, 902) begrenzt ist.

13. Taschenlochspanneinrichtung (600, 900) nach Anspruch 12, wobei der Einstellmechanismus (938) umfasst:
einen ersten Verbinder (940), der die Betätigungseinrichtung (500, 602, 904) und den Klemmkopf (906) miteinander verbindet; und
einen zweiten Verbinder (942), der den ersten Verbinder (940) und die Bohrführung (606, 910) miteinander verbindet.

14. Taschenlochspanneinrichtung (600, 900) nach einem der Ansprüche 8-13, ferner umfassend ein Staubbeseitigungselement (604), das mit der Bohrführung (606, 910) gekoppelt ist.

## Revendications

1. Gabarit de trou de poche (600, 900) comprenant :
un corps (608, 902) définissant une extrémité proximale (918) et une extrémité distale (920) ;
un actionneur (500, 602, 904) couplé fonctionnellement au corps ;
une tête de serrage (906) déplaçable par rapport au corps (608, 902) pour fixer sélectivement un objet dans une région de serrage (908) du gabarit de trou de poche (600, 900) ; et
un guide de foret (606, 910) définissant un axe de guidage pour un foret,
dans lequel l'actionneur (500, 602, 904) est déplaçable entre une position ouverte et une position fermée,
dans lequel le déplacement de l'actionneur (500, 602, 904) à partir de la position ouverte vers la position fermée déplace la tête de serrage (642, 906) vers l'extrémité proximale (918) du corps (608, 902),
dans lequel le déplacement de l'actionneur (500, 602, 904) à partir de la position ouverte vers la position fermée serre la tête de serrage (642, 906) contre l'objet et bloque la tête de serrage (642, 906) dans un état serré contre l'objet,
dans lequel le guide de foret (606, 910) peut pivoter par rapport au corps (608, 902) et dans lequel le déplacement de l'actionneur (500, 602, 904) fait pivoter le guide de foret (606, 910) par rapport au corps.

2. Gabarit de trou de poche (600, 900) selon l'une quelconque des revendications précédentes, comprenant en outre un bras de support (946), lequel, en combinaison avec **l'actionneur** (500, 602, 904), forme une interface compressible pour le déplacement de l'actionneur (500, 602, 904) vers la position fermée.

3. Gabarit de trou de poche (600, 900) selon la revendication 2, dans lequel la position fermée pour l'actionneur (500, 602, 904), telle que mesurée par rapport au bras de support (946), est substantiellement la même quelle que soit la taille de l'objet dans la région de serrage (908).

4. Gabarit de trou de poche (600, 900) selon l'une quelconque des revendications précédentes, dans lequel l'actionneur (500, 602, 904) est accouplé au corps (608, 902) par le biais d'une interface sollicitée par ressort (948) configurée pour recevoir tout déplacement supplémentaire de l'actionneur (500, 602, 904) vers la position fermée une fois que la tête de serrage (642, 906) est dans l'état serré contre l'objet dans la région de serrage (908).

5. Gabarit de trou de poche (600, 900) selon l'une quelconque des revendications précédentes, dans lequel une première partie du déplacement de l'actionneur (500, 602, 904) à partir de la position ouverte vers la position fermée serre la tête de serrage (642, 906) contre l'objet, et dans lequel une deuxième partie du déplacement de l'actionneur (500, 602, 904) bloque la tête de serrage (642, 906) dans l'état serré.

6. Gabarit de trou de poche (600, 900) selon l'une quelconque des revendications précédentes, dans lequel le déplacement de l'actionneur (500, 602, 904) comprend un mouvement de pivotement.

7. Gabarit de trou de poche (600, 900) selon l'une quelconque des revendications précédentes, comprenant en outre un élément d'extraction de poussière (604) accouplé au guide de foret (606, 910).

8. Gabarit de trou de poche (600, 900) selon la revendication 1, dans lequel le déplacement de l'actionneur (500, 602, 904) à partir de la position ouverte vers la position fermée fait pivoter le guide de foret (606, 910) et bloque le guide de foret (606, 910) avec l'axe de guidage dans un alignement spécifique par rapport à la région de serrage (908).

9. Gabarit de trou de poche (600, 900) selon la revendication 8, dans lequel le déplacement de l'actionneur (500, 602, 904) à partir de la position ouverte vers la position fermée serre la tête de serrage (906) contre l'objet et bloque la tête de serrage (906) dans un état serré contre l'objet.

10. Gabarit de trou de poche (600, 900) selon l'une quelconque des revendications 8 ou 9, dans lequel l'actionneur (500, 602, 904) est accouplé au corps (608, 902) par le biais d'une interface sollicitée par ressort (948) configurée pour recevoir tout déplacement supplémentaire de l'actionneur (500, 602, 904) vers la position fermée une fois que la tête de serrage (906) est dans un état serré contre l'objet dans la région de serrage (908).

11. Gabarit de trou de poche (600, 900) selon l'une quelconque des revendications 8 à 10, dans lequel le déplacement de l'actionneur (500, 602, 904) amène le guide de foret (606, 910) à pivoter jusqu'à ce que la tête de serrage (906) se trouve dans un état serré contre l'objet dans la région de serrage (908), après quoi le guide de foret (606, 910) ne pivote pas davantage lors du déplacement supplémentaire de l'actionneur (500, 602, 904).

12. Gabarit de trou de poche (600, 900) selon l'une quelconque des revendications 8 à 11, comprenant en outre un mécanisme de réglage (938) reliant l'actionneur (500, 602, 904), la tête de serrage (906) et le guide de foret (606, 910) entre eux, dans lequel le mouvement du mécanisme de réglage (938) est délimité par le corps (608, 902).

13. Gabarit de trou de poche (600, 900) selon la revendication 12, dans lequel le mécanisme de réglage (938) comprend :
un premier raccord (940) reliant l'actionneur (500, 602, 904) et la tête de serrage (906) entre eux ; et
un deuxième raccord (942) reliant le premier raccord (940) et le guide de foret (606, 910) entre eux.

14. Gabarit de trou de poche (600, 900) selon l'une quelconque des revendications 8 à 13, comprenant en outre un élément d'extraction de poussière (604) accouplé au guide de foret (606, 910).
